# EUROPÄISCHE PATENTSCHRIFT

(11) **EP 2 740 343 B1**
(45) Veröffentlichungstag und Bekanntmachung des Hinweises auf die Patenterteilung: **03.02.2016**
(21) Anmeldenummer: 13194850.7
(22) Anmeldetag: 28.11.2013
(51) Int. Cl.: A01D 34/23, A01D 41/14

(54) **Vorrichtung zur Befestigung eines Vertikalschneidwerks an einer Erntemaschine**
Fixing device for a vertical cutter bar on a harvester
Dispositif de fixation pour une barre de coupe verticale sur une moissoneuse

(30) Priorität: 04.12.2012 DE 102012111765
(43) Veröffentlichungstag der Anmeldung: 11.06.2014
(73) Patentinhaber: Martin Ziegler GmbH & Co. KG, 86554 Pöttmes (DE)
(72) Erfinder: Daferner, Gerhard, 86554 Pöttmes (DE); Frinzl, Richard, 86529 Schrobenhausen (DE)
(74) Vertreter: Charrier, Rapp & Liebau

(56) Entgegenhaltungen:
- DE-A1- 19 632 895
- DE-U1- 9 422 102

## Beschreibung

Die Erfindung betrifft eine Vorrichtung zur Befestigung eines Vertikalschneidwerks an einer Erntemaschine.

Aus der DE 94 22 102 U1 ist bekannt, zum Ernten bestimmter Nutzpflanzen mit signifikantem seitlichem Wuchs wie Raps an den vorderen Ecken des Mähtisches einer Erntemaschine, insbesondere eines Mähdreschers, Vertikalschneidwerke anzubauen, welche die Aufgabe haben, die in Arbeitsrichtung vor der Erntemaschine befindlichen Pflanzen, die durch ein Horizontalschneidwerk am vorderen Rand des Mähtisches geschnitten werden sollen, von den seitlich neben dem Arbeitsbereich der Erntemaschine stehenden Pflanzen freizuschneiden. Im Hinblick auf die Anwendung zum Ernten von Raps sind solche Vertikalschneidwerke auch als Rapstrenner bekannt.

Üblicherweise erfolgt die Montage solcher Vertikalschneidwerke an einer Erntemaschine durch Verschraubung mit Seitenteilen des Mähtisches oder mit Rahmenteilen der Erntemaschine. Hierzu müssen zunächst Bohrungen fluchtend zueinander ausgerichtet und dann in dieser Position gehalten werden, um Schrauben in die fluchtenden Bohrungen einzuführen. Wegen des nicht unerheblichen Gewichts eines solchen Vertikalschneidwerks muss die Montage im Regelfall von zwei Personen ausgeführt werden.

In Anbetracht dieses Standes der Technik ist es die Aufgabe der Erfindung, die Montage eines Vertikalschneidwerks an einer Erntemaschine zu erleichtern

Diese Aufgabe wird erfindungsgemäß durch eine Vorrichtung mit den Merkmalen des Anspruchs 1 gelöst. Vorteilhafte Ausgestaltungen sind in den Unteransprüchen angegeben. Eine erfindungsgemäße Vorrichtung zur Befestigung eines Vertikalschneidwerks an einer Erntemaschine weist einen zum Anbau an einem Rahmenteil der Erntemaschine geeigneten Anbauträger und eine Klemmvorrichtung auf, mittels welcher das Vertikalschneidwerk an dem Anbauträger durch eine in einer horizontalen Richtung wirkende Klemmkraft fixierbar ist. Diese Art der Befestigung stellt für die Montage eines solchen Vertikalschneidwerks an einer Erntemaschine eine wesentliche Vereinfachung dar, da keine präzise Handhabung des relativ schweren und unhandlichen Vertikalschneidwerks, insbesondere keine fluchtende Ausrichtung von Bohrungen mehr erforderlich ist. Die Montage kann daher problemlos auch von einer Person allein ausgeführt werden. Besonders einfach kann eine solche Klemmvorrichtung mittels einer Vielzahl von Klemmbacken realisiert werden, die durch Schrauben an dem Anbauträger befestigbar und mit der Klemmkraft beaufschlagbar sind.

Für eine weitere Erleichterung der Montage kann gesorgt werden, indem der Anbauträger an seiner Unterseite einen nach vorne vorstehenden Vorsprung aufweist, welcher eine Auflage zur Abstützung des Vertikalschneidwerks in vertikaler Richtung zumindest während der Montage bereitstellt. Die Notwendigkeit des manuellen Haltens des Vertikalschneidwerks in einem Abstand vom Boden während der Montage entfällt hierdurch.

Eine besonders zuverlässige Fixierung des Vertikalschneidwerks an dem Anbauträger kann dadurch erreicht werden, dass der Anbauträger und/oder die Klemmvorrichtung mindestens ein Eingriffselement aufweist, welches sich im geklemmten Zustand mit einem Bauteil des Vertikalschneidwerks in Eingriff befindet und dadurch eine formschlüssige Fixierung des Vertikalschneidwerks in horizontaler Richtung bewirkt. Eine einfache und effektive Realisierung einer solchen zusätzlichen formschlüssigen Fixierung besteht darin, dass eine Vielzahl L-förmiger Haltewinkel als Eingriffselemente an dem Anbauträger angeordnet sind und die Haltewinkel eine Ecke einer Tragschiene des Vertikalschneidwerks im geklemmten Zustand umgreifen. Vorzugsweise sind die Klemmbacken ebenfalls L-förmig ausgebildet und jeweils eine Klemmbacke und ein Haltewinkel umgreifen die Tragschiene des Vertikalschneidwerks diagonal zueinander, wodurch diese unabhängig vom genauen Wert der Klemmkraft sicher gehalten wird.

Falls an eine Erntemaschine zum Ernten bestimmter Pflanzen außer seitlichen Vertikalschneidwerken auch ein frontseitiger Vorsatzmähtisch angebaut wird, können die Seitenteile dieses Vorsatzmähtisches als Anbauträger zur Befestigung der Vertikalschneidwerke fungieren, wodurch sich in diesem Fall separate Anbauträger erübrigen.

Nachfolgend werden Ausführungsbeispiele der Erfindung anhand der Zeichnungen beschrieben. In diesen zeigt
- Fig. 1: eine perspektivische Ansicht eines erfindungsgemäß an einem Anbauträger befestigten Vertikalschneidwerks,
- Fig. 2: eine andere perspektivische Ansicht des erfindungsgemäß an einem Anbauträger befestigten Vertikalschneidwerks von Fig. 1,
- Fig. 3: eine Querschnittsansicht von oben des erfindungsgemäß an einem Anbauträger befestigten Vertikalschneidwerks von Fig. 1 und
- Fig. 4: einen Vorsatzmähtisch mit zur erfindungsgemäßen Befestigung von Vertikalschneidwerken ausgelegten Seitenteilen.

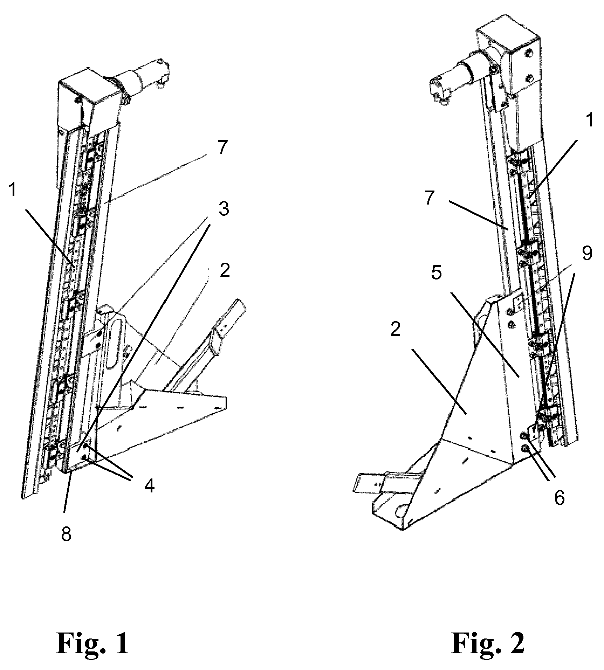

Die Figuren 1 und 2 zeigen ein Vertikalschneidwerk 1 für eine Erntemaschine, welches gemäß der Erfindung an einem Anbauträger 2 befestigt ist, jeweils in einer Ansicht schräg von oben wobei die Ansichtsrichtung von Fig. 2 gegenüber derjenigen von Fig. 1 um 180° bezüglich einer vertikalen Achse gedreht ist. Der Anbauträger 2 ist dazu ausgelegt, an einem seitlichen Tragrahmenteil einer Erntemaschine befestigt zu werden und ist in seiner Form und seinen Befestigungsmöglichkeiten an einen bestimmten Typ einer Erntemaschine angepasst. Die Befestigung des Anbauträgers 2 an der Erntemaschine ist jedoch hier nicht von näherem Interesse. Sie erfolgt vor der Befestigung des Vertikalschneidwerks 1 an dem Anbauträger 2 und kann ohne weiteres von einer einzelnen Person ausgeführt werden, da der Anbauträger 2 im Vergleich zu dem Vertikalschneidwerk 1 leichter und wesentlich handlicher ist.

Zur Befestigung des Vertikalschneidwerks 1 an dem Anbauträger 2 ist eine Klemmvorrichtung mit zwei Klemmbacken 3, die vertikal übereinander nahe dem oberen und dem unteren Ende des Anbauträgers 2 angeordnet sind, vorgesehen. Die Klemmbacken 3 werden jeweils durch zwei Schrauben 4 an einem plattenförmigen vorderen Endabschnitt 5 des Anbauträgers 2 gehalten, der in Fig. 2 erkennbar ist. Die Schrauben 4 sind auf der in Fig. 2 sichtbaren Seite des Endabschnitts 5 des Anbauträgers 2 mit Muttern 6 verschraubt. Dadurch drücken die Klemmbacken 3 eine im Querschnitt rechteckige Tragschiene 7 des Vertikalschneidwerks 1 gegen den Endabschnitt 5 des Anbauträgers 2, wenn die Schrauben 4 angezogen sind, und klemmen das Vertikalschneidwerk 1 auf diese Weise in horizontaler Richtung an dem Anbauträger 2 fest.

Die beiden identischen Klemmbacken 3 sind in wesentlichen L-förmig und haben zwei Schenkel, nämlich einen dünneren und etwas längeren Schenkel, der im geklemmten Zustand die Klemmkraft auf die Tragschiene 7 überträgt und einen dickeren und etwas kürzeren Schenkel, durch den sich die Bohrungen für die Schrauben 4 in seiner Längsrichtung hindurch erstrecken.

Um die Montage des Vertikalschneidwerks 1 an dem Anbauträger 2 zu erleichtern, weist der Anbauträger 2 an seinem unteren Ende einen nach vorne vorstehenden, plattenförmigen Vorsprung 8 auf, der eine horizontale Auflagefläche für die Tragschiene 7 des Vertikalschneidwerks 1 bietet. Die Person, welche die Montage des Vertikalschneidwerks 1 an dem Anbauträger 2 ausführt, kann das Vertikalschneidwerk 1 also zunächst mit dem unteren Ende der Tragschiene 7 auf dem Vorsprung 8 abstellen, bevor sie die Schrauben 4 anzieht, um das Vertikalschneidwerk 1 durch Klemmung endgültig an dem Endabschnitt 5 des Anbauträgers 2 zu fixieren. Die Person braucht somit das Gewicht des Vertikalschneidwerks 1 während des Anziehens der Schrauben 4 nicht zu halten.

Um zu vermeiden, dass die Tragschiene 7 durch Vibrationen im Betrieb des Vertikalschneidwerks 1 nach vorne aus der Klemmung zwischen dem Endabschnitt 5 des Anbauträgers 2 und den Klemmbacken 3 herausrutschen könnte, sind an dem Endabschnitt 5 auf der Höhe der Klemmbacken 3 zwei L-förmige Haltewinkel 9 befestigt, vorzugsweise angeschweißt. Ein Schenkel jedes Haltewinkels 9 verläuft auf der Außenseite des Endabschnitts 5 des Anbauträgers 2 parallel zu dessen Oberfläche, während sich der andere Schenkel senkrecht dazu nach innen erstreckt und die Tragschiene 7 des Vertikalschneidwerks 1 im geklemmten Zustand an deren Vorderseite umgreift. Hierdurch ergibt sich im geklemmten Zustand an der Vorderseite der Tragschiene 7 ein Formschluss, der für eine zuverlässige Fixierung der Tragschiene 7 unabhängig von der genauen Größe der durch das Anziehen der Schrauben 4 erzeugten Klemmkraft sorgt.

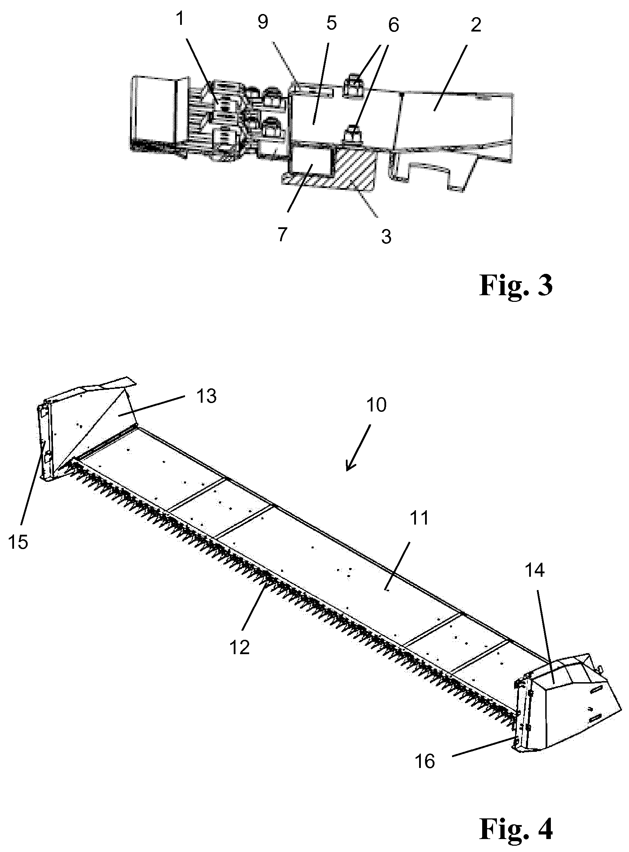

Fig. 3 zeigt zur Verdeutlichung eine Querschnittsansicht, deren Schnittebene durch die obere der beiden in Fig. 1 sichtbaren Klemmbacken 3 verläuft. In dieser Ansicht sind der rechteckige Querschnitt der Tragschiene 7 sowie die zuvor beschriebene Form einer Klemmbacke 3, die in Fig. 3 schraffiert ist, gut erkennbar. Von den Haltewinkeln 9 ist in Fig. 3 nur der untere sichtbar. Die beiden Muttern 6 erscheinen in Fig. 3 gegeneinander versetzt, weil der plattenförmige Endabschnitt 5 des Anbauträgers 2 nicht genau vertikal steht, sondern geringfügig gegenüber der Vertikalrichtung geneigt ist. Es versteht sich, dass diese Neigung auch eine entsprechend geneigte Stellung des Vertikalschneidwerks 1 zur Folge hat.

Um die Tragschiene 7 zwischen die Haltewinkel 9 und die Klemmbacken 3 einführen zu können, müssen die Schrauben 4 weit genug gelöst werden, damit sich die dünneren, nach vorne gerichteten Schenkel der Klemmbacken 3 ausreichend weit von dem Endabschnitt 5 des Anbauträgers 2 weg bewegen lassen, um zwischen den Klemmbacken 3 und den Haltewinkeln 9 einen Spalt von der Breite der Tragschiene 7 freizugeben. Bei der Montage sorgen die Haltewinkel 9 nach dem Einführen der Tragschiene 7 für eine zusätzliche Stabilisierung des Vertikalschneidwerks 1 in seiner vorgesehenen Position bereits vor dem Anziehen der Schrauben 4.

Der in den Figuren 1 bis 3 gezeigte Anbauträger 2 ist zur direkten Montage an einem Tragrahmenteil einer Erntemaschine vorgesehen, die bereits über einen zum Ernten vom Nutzpflanzen wie Raps geeigneten Mähtisch verfügt und lediglich noch mit Vertikalschneidwerken 1 an den vorderen Ecken ausgerüstet werden muss. An manche Erntemaschinen muss jedoch zum Ernten von Nutzpflanzen der fraglichen Art ein Vorsatzmähtisch 10 angebaut werden, um die Gesamttiefe des Mähtisches zu vergrößern. Einen solchen Vorsatzmähtisch 10 zeigt Fig. 4. Er besteht aus einem Horizontalteil 11 mit einem frontseitigen Horizontalschneidwerk 12 und aus zwei vertikalen Seitenteilen 13 und 14, welche den Aufnahmeraum für die durch das Horizontalschneidwerk 12 geschnittenen Pflanzen in seitlicher Richtung begrenzen.

Bei Verwendung eines solchen Vorsatzmähtisches 10 haben hinsichtlich der Befestigung von Vertikalschneidwerken 1 die Seitenteile 13 und 14 die Funktion von Anbauträgern 2 der zuvor beschriebenen Art. Auch die Befestigung des gesamten Vorsatzmähtisches 10 an vorderen Rahmenteilen einer Erntemaschine erfolgt in diesem Fall über die Seitenteile 13 und 14. Diese weisen Endabschnitte 15 bzw. 16 auf, welche in gleicher Weise wie der Endabschnitt 5 eines Anbauträgers 2 zur Befestigung eines Vertikalschneidwerks 1 durch Klemmung einer Tragschiene 7 ausgelegt sind. Alle zuvor erwähnten Komponenten der erfindungsgemäßen Befestigung sind auch bei dieser Variante in gleicher Funktion vorgesehen, weshalb an dieser Stelle keine detaillierte Beschreibung dieser Komponenten mehr erforderlich ist.

Wie aus den Figuren 1 bis 3 ersichtlich ist, hat der Anbauträger 2 keine symmetrische Form. Es werden daher für jede Erntemaschine zwei verschiedene Anbauträger 2 benötigt, um an jeder vorderen Ecke des Mähtisches jeweils ein Vertikalschneidwerk 1 zu montieren. Die beiden Anbauträger 2 sind zumindest im Bereich ihres jeweiligen Endabschnitts 5, an dem ein Vertikalschneidwerk 1 befestigt wird, zueinander spiegelsymmetrisch und die vorausgehende Beschreibung hat für beide Anbauträger 2 Gültigkeit. Die Formgebung im Bereich der Befestigung an der Erntemaschine muss hingegen nicht symmetrisch sein, sondern ist an den Rahmen der Erntemaschine angepasst, der auch unsymmetrisch sein kann. Diese Symmetriegesichtspunkte gelten sinngemäß auch für die beiden Seitenteile 13 und 14 eines Mähtisches 10.

Die in den Figuren gezeigte Anzahl von je zwei Klemmbacken 3 und Haltewinkeln 9 ist rein beispielhaft gemeint. Bei Bedarf könnten auch jeweils mehr als zwei dieser Komponenten verwendet werden.

## Patentansprüche

1. Vorrichtung zur Befestigung eines Vertikalschneidwerks (1) an einer Erntemaschine, wobei sie einen zum Anbau an einem Rahmenteil der Erntemaschine geeigneten Anbauträger (2) aufweist, **dadurch gekennzeichnet, dass** sie eine Klemmvorrichtung aufweist, mittels welcher das Vertikalschneidwerk (1) an dem Anbauträger (2) durch eine in einer horizontalen Richtung wirkende Klemmkraft fixierbar ist.

2. Vorrichtung nach Anspruch 1, **dadurch gekennzeichnet, dass** die Klemmvorrichtung eine Vielzahl von Klemmbacken (3) aufweist, die durch Schrauben (4) an dem Anbauträger (2) befestigbar und mit der Klemmkraft beaufschlagbar sind.

3. Vorrichtung nach Anspruch 1 oder 2, **dadurch gekennzeichnet, dass** der Anbauträger (2) an seiner Unterseite einen nach vorne vorstehenden Vorsprung (8) aufweist, welcher eine Auflage zur Abstützung des Vertikalschneidwerks (1) in vertikaler Richtung zumindest während der Montage bereitstellt.

4. Vorrichtung nach einem der Ansprüche 1 bis 3, **dadurch gekennzeichnet, dass** der Anbauträger (2) und/oder die Klemmvorrichtung mindestens ein Eingriffselement (9) aufweist, welches sich im geklemmten Zustand mit einem Bauteil (7) des Vertikalschneidwerks (1) in Eingriff befindet und dadurch eine formschlüssige Fixierung des Vertikalschneidwerks (1) in horizontaler Richtung bewirkt.

5. Vorrichtung nach Anspruch 4, **dadurch gekennzeichnet, dass** eine Vielzahl L-förmiger Haltewinkel (9) als Eingriffselemente (9) an dem Anbauträger (2) angeordnet sind, und dass die Haltewinkel (9) eine Ecke einer Tragschiene (7) des Vertikalschneidwerks (1) im geklemmten Zustand umgreifen.

6. Vorrichtung nach Anspruch 5, **dadurch gekennzeichnet, dass** die Klemmbacken (3) ebenfalls L-förmig ausgebildet sind und jeweils eine Klemmbacke (3) und ein Haltewinkel (9) die Tragschiene (7) des Vertikalschneidwerks (1) diagonal zueinander umgreifen.

7. Vorrichtung nach einem der Ansprüche 1 bis 6, **dadurch gekennzeichnet, dass** der Anbauträger (2) durch ein Seitenteil (13; 14) eines frontseitig an einer Erntemaschine befestigbaren Vorsatzmähtisches (10) gebildet wird.

## Claims

1. Device for attaching a vertical cutting mechanism (1) to a harvesting machine, wherein it has an attachment support (2) suitable for attachment to a frame part of the harvesting machine, **characterised in that** it has a clamping device, by means of which the vertical cutting mechanism (1) can be fixed to the attachment support (2) by a clamping force acting in a horizontal direction.

2. Device according to claim 1, **characterised in that** the clamping device has a plurality of clamping jaws (3) which can be attached to the attachment support (2) by screws (4) and can be subjected to the clamping force.

3. Device according to claim 1 or 2, **characterised in that** the attachment support (2) has on its underside a projection (8) protruding forwards which provides a rest for supporting the vertical cutting mechanism (1) in the vertical direction at least during assembly.

4. Device according to one of claims 1 to 3, **characterised in that** the attachment support (2) and/or the clamping device has at least one engagement element (9) which is engaged in the clamped state with a component (7) of the vertical cutting mechanism (1) and thus effects positive fixing of the vertical cuttingmechanism (1) in the horizontal direction.

5. Device according to claim 4, **characterised in that** a plurality of L-shaped holding angles (9) are arranged as engagement elements (9) on the attachment support (2), and **in that** the holding angles (9) encompass a corner of a bearing rail (7) of the vertical cutting mechanism (1) in the clamped state.

6. Device according to claim 5, **characterised in that** the clamping jaws (3) are likewise designed to be L-shaped and in each case a clamping jaw (3) and a holding angle (9) encompass the bearing rail (7) of the vertical cutting mechanism (1) diagonally to one another.

7. Device according to one of claims 1 to 6, **characterised in that** the attachment support (2) is formed by a side part (13; 14) of an attachment reaper table (10) which can be attached to the front side of a harvesting machine.

## Revendications

1. Dispositif servant à fixer un mécanisme de coupe vertical (1) au niveau d'une moissonneuse, sachant qu'il présente un support de montage (2) adapté aux fins du montage au niveau d'une partie de cadre de la moissonneuse, **caractérisé en ce qu'**il présente un dispositif de serrage, au moyen duquel le mécanisme de coupe vertical (1) peut être fixé au niveau du support de montage (2) par une force de serrage agissant dans une direction horizontale.

2. Dispositif selon la revendication 1, **caractérisé en ce que** le dispositif de serrage présente une pluralité de mâchoires de serrage (3), qui peuvent être fixées par des vis (4) au niveau du support de montage (2) et qui peuvent être soumises à l'action de la force de serrage.

3. Dispositif selon la revendication 1 ou 2, **caractérisé en ce que** le support de montage (2) présente, au niveau de son côté inférieur, une partie faisant saillie (8) dépassant vers l'avant, laquelle offre un appui servant à soutenir le mécanisme de coupe vertical (1) dans la direction verticale au moins au cours de l'installation.

4. Dispositif selon l'une quelconque des revendications 1 à 3, **caractérisé en ce que** le support de montage (2) et/ou le dispositif de serrage présentent au moins un élément de prise (9), qui se trouve en prise, dans l'état serré, avec un composant (7) du mécanisme de coupe vertical (1) et qui entraîne, de ce fait, une fixation par complémentarité de forme du mécanisme de coupe vertical (1) dans la direction horizontale.

5. Dispositif selon la revendication 4, **caractérisé en ce qu'**une pluralité d'angles de maintien (9) en forme de L se présentant sont disposés en tant qu'éléments de prise (9) au niveau du support de montage (2), et **en ce que** les angles de maintien (9) entourent un coin d'un rail porteur (7) du mécanisme de coupe vertical (1) dans l'état serré.

6. Dispositif selon la revendication 5, **caractérisé en ce que** les mâchoires de serrage (3) sont réalisées également de manière à présenter une forme en L, et **en ce que** respectivement une mâchoire de serrage (3) et un angle de maintien (9) entourent l'un par rapport à l'autre de manière diagonale le rail porteur (7) du mécanisme de coupe vertical (1).

7. Dispositif selon l'une quelconque des revendications 1 à 6, **caractérisé en ce que** le support de montage (2) est formé par une partie latérale (13 ; 14) d'une plate-forme de coupe (10) pouvant être fixée côté avant au niveau d'une moissonneuse.
